# EUROPÄISCHE PATENTSCHRIFT

(11) **EP 1 926 875 B1**
(45) Veröffentlichungstag und Bekanntmachung des Hinweises auf die Patenterteilung: **06.04.2011**
(21) Anmeldenummer: 06777245.9
(22) Anmeldetag: 30.05.2006
(51) Int. Cl.: E05C 17/24, E05D 15/28, E05F 3/22

(54) **BESCHLAG FÜR EIN FENSTER ODER EINE TÜR**
FITTING FOR A WINDOW OR DOOR
FERRURE POUR FENETRE OU PORTE

(30) Priorität: 22.09.2005 DE 202005015034 U
(43) Veröffentlichungstag der Anmeldung: 04.06.2008
(73) Patentinhaber: SIEGENIA-AUBI KG, 57234 Wilnsdorf (DE)
(72) Erfinder: AFFLERBACH, Dirk, 57072 Siegen (DE); KRAFT, Ralf, 57072 Siegen (DE); STARK, Ingo, 57250 Netphen (DE)
(86) Internationale Anmeldenummer: PCT/EP2006/062723
(87) Internationale Veröffentlichungsnummer: WO 2007/033842

(56) Entgegenhaltungen:
- DE-A1- 1 708 450
- DE-A1- 1 957 205
- DE-U1- 7 635 460
- DE-U1- 9 102 070
- FR-A- 2 072 702

## Beschreibung

Die Erfindung betrifft ein Beschlag gemäß der im Oberbegriff des Anspruchs 1 angegebenen Art.

Ein derartiger Beschlag dieser Art ist durch die DE 7635460 U1 bekannt geworden.

Hierbei ist ein Gleitstück in einer hinterschnittenen Profilnut geführt gelagert. Ein am Ausstellarm einer Gelenkverbindung angeordneter Zapfen greift dabei zum fixieren der Bauteile in ein Loch des Gleitstückes, wobei der Zapfen durch ein federbelastetes Sicherungsglied mit dem Gleitstück eine lösbare Verbindung eingeht. Das Sicherungsglied besteht aus mindestens einem im Gleitstück sitzenden Biegefederstab, der an seinen Enden eingespannt ist und tangential in eine Umfangsnut des Zapfens eingreift. Außerdem befindet sich achsparallel, aber seitlich versetzt zum Lagerloch im Gleitstück eine schlüssellochartige Ausnehmung zum Einstecken eines Schlüssels, durch dessen in einer kreisförmigen Erweiterung der Aussparung verdrehbaren Bart der Biegefederstab aus der Umfangsnut des Zapfens herausdrängbar ist.

Das bekannte Gleitstück besteht dabei aus zwei durch Vemietung mittels Nietbolzen miteinander verbundenen Gehäuseteilen, zwischen denen die Biegefederstäbe in entsprechend geformte Ausnehmungen im Gehäuse eingeschlossen positioniert werden.

Die Gehäuseteile bedürfen nach der gezeigten Ausführung einer relativ aufwendigen Herstellung. So sind diese in einem Gießverfahren vorzugsweise, um eine gute Gleiteigenschaft zu erhalten, aus einem Kunststoff gebildet. Mit zunehmendem Gebrauch durch Verfahren in der Führungsschiene entstehen je nach Belastung auf das Gleitstück oder durch schlechte Verarbeitung der Führungsschiene Abnutzungen an den Gehäusehälften, die sich der bereits aufgrund der Materialwahl begrenzten Traglast ebenfalls als nachteilig zunehmend bemerkbar machen. Besonders bei Belastungsfällen, beispielsweise beim Kippöffnen, durch die Übernahme des Gewichts des Flügelrahmens der Tür oder des Fensters oder bei einem Einbruchversuch besteht die Gefahr, dass die Biegefederstäbe aus der erwähnten Ausnehmung der Gehäusehälften austreten können, so dass sich der am Ausstellarm befestigte Zapfen löst, woraus sich folglich der Flügelrahmen in einer ungesicherten entkoppelten Position befindet.

Der Erfindung liegt demgegenüber die Aufgabe zugrunde, ein Beschlag der gattungsgemäßen Art so weiter zu bilden, dass mit kostengünstiger Variante ein sicherer Halt bei hoher Traglast des Flügels gewährleistet ist.

Die erfindungsgemäße Lösung der Aufgabe wird durch die Merkmale des kennzeichnenden Teils des Patentanspruchs 1 gelöst. Die Unteransprüche beziehen sich auf weitere vorteilhafte Ausgestaltungen der Erfindung.

Der Erfindung liegt die Erkenntnis zugrunde, dass das Vorsehen einer Stützplatte bestehend aus einem metallischen Werkstoff über die Führungsflächen der Führungsschiene hinaus und durch eine direkte fixierende Verbindung des Sicherungsgliedes mit der Stützplatte, als ein Ganzes ausmachend, ein großer Halt selbst bei hoher Traglast entsteht und das Gehäuse -bestehend vorzugsweise aus einem Kunststoffmaterial- von möglichen Belastungsfaktoren des Flügelrahmens befreit ist. Hierdurch wird die Lebensdauer und die Traglast des Gleitstücks und damit des Beschlags erhöht.

Eine zweckmäßige, weil einfache und kostengünstige Herstellung der Stützplatte ist gewährleistet, wenn sie aus einem metallischen Werkstoff und als Bandmaterial gefertigt ist, welches nach Bearbeitung alle Funktionen beinhaltet, dass Sicherungsglied in einer gesicherten und funktionsfähigen Position zu halten. Dabei ist das Gleitstück zur Vereinfachung der Montage in das Gleitergehäuse längs und quer zur Profilnut symmetrisch ausgebildet.

Dazu ist die Stützplatte erfindungsgemäß in einer leicht herstellbaren Weise an den jeweiligen Enden mit Abkröpfungen versehen, die das Sicherungsglied an den jeweiligen Enden gegen das Verschieben in Längs-, in Quer- und in senkrechter Richtung des Gleitstücks sichert.

Außerdem erhält das federbelastete Sicherungsglied so einen größtmöglichen Federweg, was in Folge dessen ein Rasten bzw. ein Entkoppeln des Zapfens leichter macht.

Ein weiteres Merkmal ist, dass die Stützplatte in axialer Mitte eine Lagerbohrung aufweist, die den Durchgriff für den am Ausstellarm sitzenden Zapfen bildet. Dies ist ein weiteres vorteilhaftes Merkmal zur Bildung eines symmetrischen Bauteils, welches zur Vereinfachung der Montage des Gleitstücks beiträgt. Das Einschieben des Gleitstücks in die Führungsschiene erweist sich ebenfalls als einfach, da sich aufgrund der gleichen Seiten die Überlegung auf Rechts- oder Linksverwendbarkeit erübrigt.

Vorteilhaft ist nach einem weiteren Merkmal der Erfindung, dass die Stützplatte unmittelbar in der Nähe der Lagerbohrung quer zur Profilnut und senkrecht zur Führungsschiene eine Abkröpfung aufweist, die außenseitig so ausgeschnitten ist, dass sich ein Steg bildet.

Mit dieser Abkröpfung wird die Lage des Sicherungsgliedes senkrecht und auch quer zur Profilnut festgelegt. Die senkrechte Lage bestimmt die Einschubtiefe des Zapfens in das Gleitstück. Der Steg legt das waagerechte Maß des Sicherungsgliedes fest und bestimmt so die Kraft zum Einrasten. Außerdem legt die Höhe der Abkröpfung, ausgehend von der Fläche der Stützplatte zum Gleitergehäuse, den Raum zur drehbaren Verstellung eines Schlüsselseinsatzes fest. Die Bartgröße des Schlüssels ist bei Betätigung in dem Raum nahezu spielfrei abgestimmt.

Die feste, leicht vorgespannte Lage des federbelasteten Sicherungsgliedes an der Stützplatte wird in vorteilhafter Weise damit erzielt, dass der Steg an der Stützplatte das Abstandsmaß innenseitig und die endseitigen Abkröpfungen außenseitigen Halt bieten.

Konstruktiv einfach und besonders wirtschaftlich herstellbar ist nach der Erfindung, wenn das federbelastete Sicherungsglied von einem vorzugsweise zwei im Gleitstück an der Stützplatte sitzenden Biegefederstäben gebildet wird. Für die Herstellung des Sicherungsgliedes bedarf es so nur eines Arbeitsganges dem Schneiden auf Länge. Ein U-förmiger Biegefederstab wäre auch denkbar, jedoch müsste ein zweiter Arbeitsgang vorgenommen werden, der das Sicherungsglied nach dem Schneiden in die U-Form verwandelt.

Vorteilhaft ist auch, dass das Gleitstück aus zwei durch Rastverbindung miteinander verbundenen Teilen, nämlich einem Gleitergehäuse und der Stützplatte besteht, zwischen denen die Biegefederstäbe federkraftbeaufschlagbar sind.

Damit das Gleitstück sowohl bei rechts als auch bei links angeschlagenem Ausstellarm entkuppelt werden kann, ist nach einem weiteren Merkmal der Erfindung achsparallel, aber seitlich versetzt zur Lagerbohrung eine schlüssellochartige Ausnehmung zum Einstecken eines Schlüssels angeordnet, durch dessen in einem freien Raum zwischen Gleitergehäuse und Stützplatte angeordnete Biegefederstab mittels verdrehbaren Bart des Schlüssels aus der Umfangsnut des Zapfens herausdrängbar ist.

Ein weiteres Merkmal ist, dass die Stützplatte in Verlängerung zur Drehachse der schlüssellochartigen Ausnehmung eine Bohrung aufweist, die den Schlüssel zentriert. Eine falsche Handhabung bei Betätigung des Schlüssels wird damit ausgeschlossen.

Besonders vorteilhaft ist, dass das Gleitergehäuse an den rechtwinklig angeordneten Stegen der Profilnut verlaufende Stege aufweist, die zum freien Ende hin Rastnasen besitzen, mit denen das als ein Ganzes ausmachendes Bauteil nach einem Einrastvorgang hintergriffen ist.

Die Rastkraft lässt sich möglichst genau festlegen, wenn dass Gleitergehäuse aus einem Kunststoffmaterial besteht. Es ergeben sich aber durch die Wahl des Werkstoffs weitere Vorteile der Herstellung und der Gleiteigenschaft im eingebauten Zustand. Bei Verwendung eines entsprechenden Kunststoffmaterials können bei guter Gleiteigenschaft und glatter, formgenauer Konstruktion zur Profilnut geringe Laufgeräusche erreicht werden.

In einer anderen Ausführungsvariante weist die Stützplatte zur gesicherten Aufnahme einer Halteplatte auf der zur Stellachse gerichteten Seite Rastnasen auf. Die Anordnung der Rastnasen richtet sich dabei nach der Bauhöhe der Halteplatte. In der Regel befinden sich die Rastnasen etwa in halber Höhe der Stützplatte, wobei in vorteilhafter Weise die Wände der Stützplatte zur Führung beim Einführen der Halteplatte genutzt werden.

Eine einfache und kostengünstige Herstellung ist dann gewährleistet, wenn das federbelastete Sicherungsglied von einem vorzugsweise zwei in der Halteplatte und an der Stützplatte sitzenden Biegefederstäben gebildet wird. Wie in der ersten Ausführungsvariante erfordert die Herstellung der Biegefederstäbe nur einen Arbeitsgang zum schneiden auf Länge, die sich nach der Art der Ausführung der Halteplatte richtet.

Ohne weiteren Bauteileaufwand werden die Biegefederstäbe sowohl quer zur Profilnut voneinander beabstandet als auch senkrecht zur Führungsschiene unmittelbar in der Nähe der Lagerbohrung ausgerichtet, indem die Halteplatte quer zur Profilnut und senkrecht zur Führungsschiene eine Abkröpfung aufweist, die außenseitig so ausgeschnitten ist, dass sich im Mittelbereich ein Steg bildet.

Weitere Endseitig an der Halteplatte angeordnete Abkröpfungen, aufgeteilt in längsseitige zur Profilnut angebrachte Abkröpfungen und am Kopfende angeordnete Abkröpfungen, halten die Biegefederstäbe außenseitig und sichern die Biegefederstäbe gegen längsseitige Verschiebung, wobei in Verbindung mit dem an der Lagerbohrung angebrachten Steg das federbelastete Sicherungsglied in einer leicht vorgespannten Einbaulage montiert ist. Daraus resultiert ein Abstandsmaß zwischen den beiden Biegefederstäben, wonach sich die Kraft zum Einrasten festlegen lässt.

Das Gleitstück setzt sich demnach aus zwei durch Rastverbindung miteinander verbundenen Teilen, einer Stützplatte und der Halteplatte zusammen. Im eingebauten Zustand sind die Biegefederstäbe unverlierbar zwischen Stützplatte und Halteplatte fixiert und bilden gemeinsam ein als ein Ganzes ausmachendes Bauteil.

Ein weiteres Merkmal dieser Variante ist, dass in der Stützplatte des Gleitstücks achsparallel, aber seitlich versetzt zur Lagerbohrung eine schlüssellochartige Ausnehmung zum Einstecken eines Schlüssels angeordnet ist, durch dessen in einem freien Raum zwischen Stützplatte und Halteplatte angeordnete Biegefederstab mittels verdrehbaren Bart des Schlüssels aus der Umfangsnut des Zapfens herausdrängbar ist.

Ein weiteres Merkmal ist, dass die Halteplatte in Verlängerung zur Drehachse der schlüssellochartigen Ausnehmung beidseitig eine Bohrung aufweist, die den Schlüssel an einem freien Ende zentriert. Eine falsche Handhabung bei Betätigung des Schlüssels wird damit ausgeschlossen.

Eine besondere Ausführungsform sieht vor, dass die Höhe der Abkröpfung der Halteplatte zur Fläche der Stützplatte die etwa der Höhe des Bartes entspricht, wobei die Fläche der Stützplatte den Endanschlag des Schlüssels bewirkt.

Um einen sicheren Halt der Halteplatte zur Stützplatte auch in Längsrichtung zur Profilnut zu bekommen, sind in vorteilhaft einfacher Weise die am Kopfende angeordneten Abkröpfungen über eine Erweiterung verlängert, wobei die Erweiterung eine abgewinkelte Kontur aufweist und eine rastende Wirkung zur Halteplatte bewirkt.

Eine besonders vorteilhafte Weiterbildung dieser Ausführungsform sieht vor, dass die Stützplatte quer zur Längsrichtung der Führungsschiene im Querschnitt eine mehrfach abgewinkelte Kontur aufweist, die sich der Profilnut der Führungsschiene anpasst.

Dabei ist die Stützplatte vorzugsweise aus einem metallischen Bandmaterial hergestellt, was sich positiv auf die Herstellung und auf die Kosten auswirkt.

Nach einem weiteren Merkmal der Erfindung sind im Bereich der Profilnut der Führungsflächen und in Verlängerung rechtwinklig zu den Führungsflächen senkrecht zur Stellachse, Gleitmittel angeordnet, die vorzugsweise durch Klipsen oder Aufpressen mit der Stützplatte verbindbar sind und vorzugsweise aus einem Kunststoffmaterial bestehen. Die mehrfach abgewinkelte Kontur der Stützplatte erleichtert nicht nur die Montage und eine einfache Konzeption der Gleitmittel, sondern erhöht den sicheren Halt des Gleitstücks in der Führungsschiene. Die Gleitmittel können von einem Endlosband kommend auf die entsprechende Länge abgeschnitten werden.

Eine nicht erfindungsgemäße Ausbildung der Halteplatte ist so ausgeführt dass die Halteplatte quer zur Führungsschiene in der Mittelachse des Gleitstücks geteilt ist und durch mindestens eine vorzugsweise zwei Zugfedern federkraftbeaufschlagt miteinander verbunden sind.

Bei der Montage drückt der am Ausstellarm angeordnete Zapfen mit seinen Einlaufschrägen die federkraftbeaufschlagten Halteplatten in Längsrichtung der Profilnut auseinander und schließen sich sobald die Halteplatten in die am Zapfen angebrachte Umfangsnut eingreifen.

Dafür ist an der jeweiligen Halteplatte mit Teilung durch die Mittelachse jeweils ein halbkreisförmiger Ausschnitt vorgesehen, die zusammen die Lagerbohrung bilden und in die voran beschriebene Umfangsnut eingreifen und vollständig umgreifen.

Um die Verbindung des Zapfen mit dem Gleitstück zum Aushängen des Flügelrahmens wieder lösen zu können, ist an den von der Lagerbohrung entfernten Enden der geteilten Halteplatte eine abgewinkelte Fläche vorgesehen, die über die Länge der Stützplatte und aus der Profilnut der Führungsschiene achsparallel zum Zapfen ausragt.

Das Lösen ist von Hand und damit ohne einen Werkzeugeingriff möglich, indem die abgewinkelten Flächen auseinander gedrückt werden, bis die halbkreisförmigen Ausschnitte der geteilten Halteplatte aus der Umfangsnut des Zapfen gelangen.

Weitere Vorteile ergeben sich aus der folgenden Zeichnungsbeschreibung.

Es zeigen:
Fig. 1 Ein erstes Ausführungsbeispiel eines Gleitstücks mit einer Führungsschiene und einem Ausstellarm in einer perspektivischen Ansicht nach der Erfindung.
Fig. 2 Eine perspektivische Darstellung mit den funktionswesentlichen Bauteilen der Biegefederstäben und des Stützbleches als ein Ganzes ausmachendes Bauteil.
Fig. 3 Das Gleitstück nach Figur 1 in einer Darstellung um 180° gedreht, mit einem *Schlüssel.
Fig. 4 Ein zweites Ausführungsbeispiel des Gleitstücks als ein Ganzes ausmachendes Bauteil mit einem Ausstellarm und einer Führungsschiene in perspektivischer Darstellung der Erfindung.
Fig. 5 Eine perspektivische Darstellung des Haltebleches im eingebauten Zustand mit den Biegefederstäben nach Fig. 4.
Fig. 6 Ein nicht erfindungsgemäßes Ausführungsbeispiel eines Gleitstücks als ein Ganzes ausmachendes Bauteil mit einem Ausstellarm und einer Führungsschiene in perspektivischer Darstellung.
Fig. 7 Eine perspektivische Darstellung des Haltebleches im eingebauten Zustand mit entsprechenden Zugfedern nach Fig. 6.

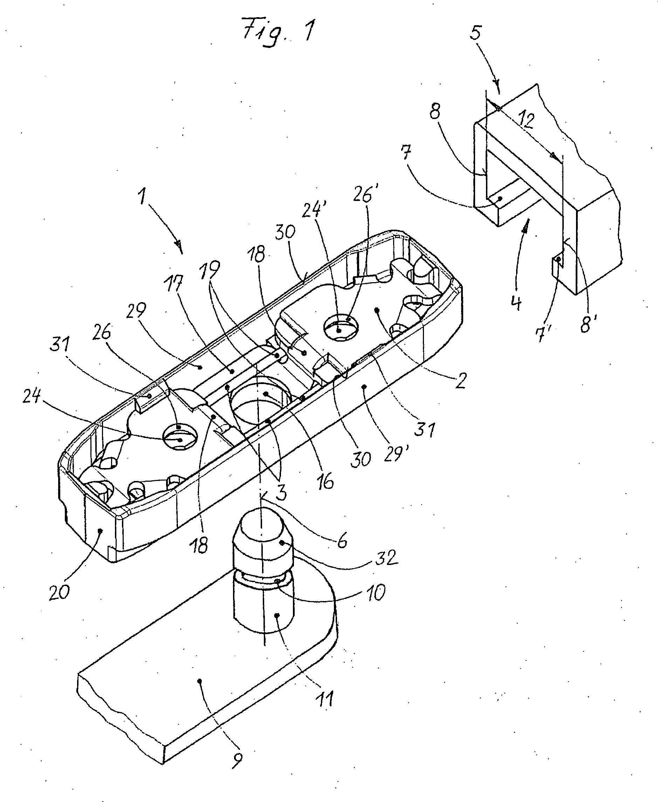

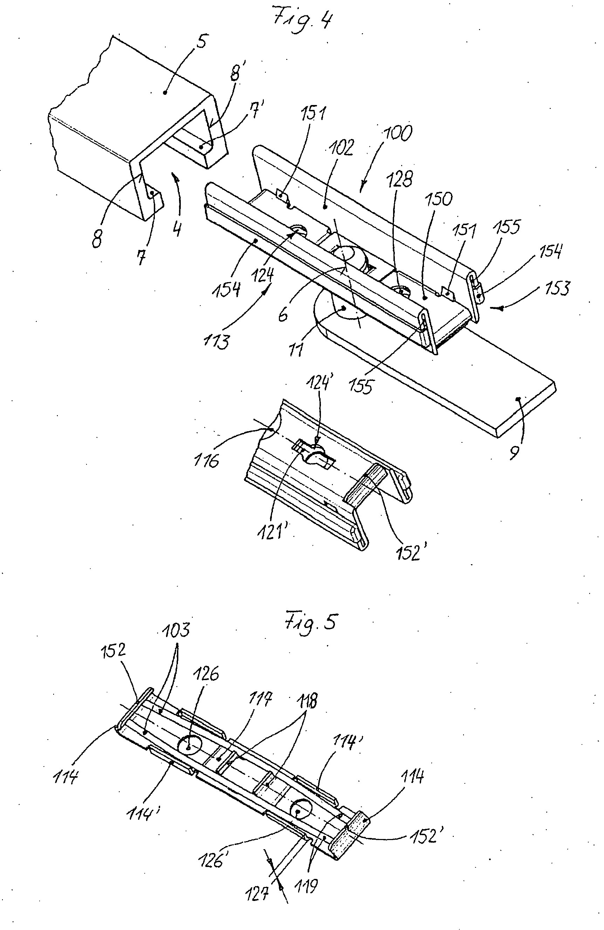

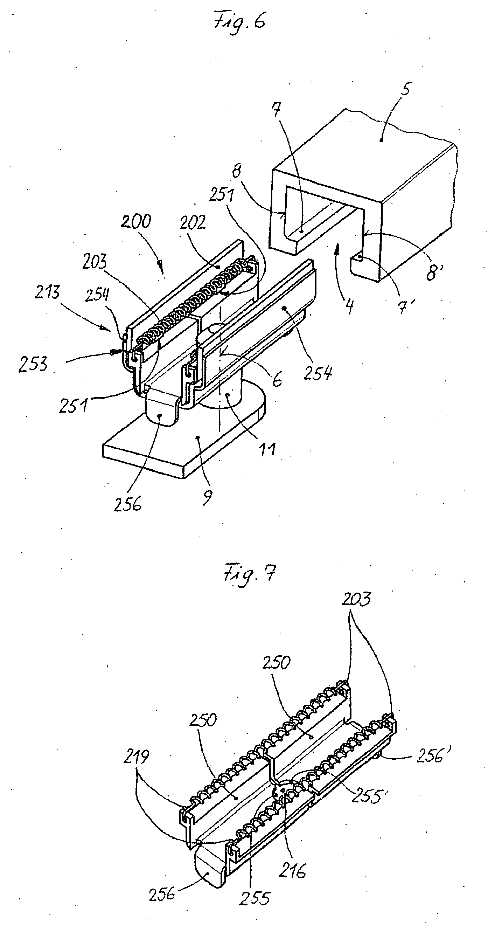

Gleiche Bauteile werden nachfolgend mit gleichen Bezugszeichen versehen. Bei der in Fig. 4 und Fig. 5 dargestellten weiteren Ausführungsform sind Bauteile, die solchen in den Fig. 1 bis Fig. 3 entsprechen, mit den selben Bezugzeichen jeweils vermehrt um die Zahl 100 versehen. Bauteile der Fig. 6 und Fig. 7 dargestellten Ausführungsform, welche Bauteilen in Fig. 1 bis 5 entsprechen, sind mit den selben Bezugzeichen jeweils vermehrt um die Zahl 200 versehen.

In der Fig. 1 bis 7 sind Ausführungsbeispiele eines Gleitstücks 1,100,200 nach der Erfindung dargestellt, die ein federkraftbeaufschlagtes Sicherungsglied 3,103,203 beinhalten und mit einem Ausstellarm 9 am Flügel zusammenwirkt. Dafür ist nach Fig. 1 am Ausstellarm 9 ein Zapfen 11 versehen, der wiederum an seinem freien Ende eine konische Andrehung 32 hat und im Abstand unter dieser mit einer Umfangsnut 10 versehen ist.

Über dem Zapfen 11 wird der Ausstellarm 9 an einem Gleitstück 1,100,200 in Richtung einer Stellachse 6 angelenkt, wobei das Gleitstück 1,100,200 in einer am Blendrahmen eines Fensters oder einer Tür befestigbaren C-förmig hinterschnittenen Profilnut 4 einer Führungsschiene 5 eingeschoben werden kann. Dabei wird das Gleitstück 1,100,200 durch parallel zur Stellachse 6 erstreckende Führungsflächen 7,7' einerseits geführt und andererseits gegen herausfallen aus der Führungsschiene 5 gesichert. In Verlängerung der Führungsflächen 7,7'sind rechtwinklig Stege 8,8'angeordnet, die das Gleitstück 1,100,200 senkrecht zur Stellachse 6 abstützen, aber auch gleichzeitig führen.

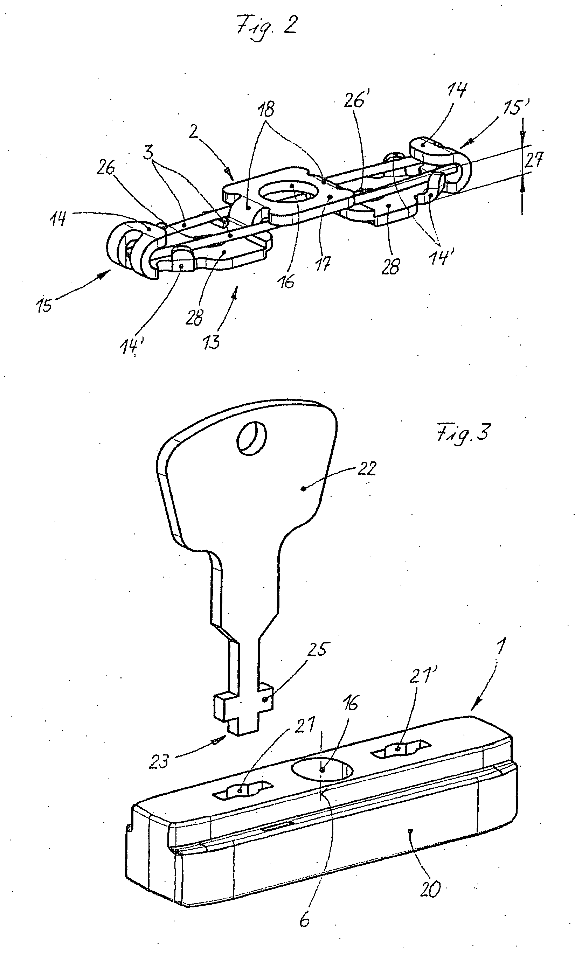

Das Gleitstück 1 besteht aus einem Gleitergehäuse 20, einer Stützplatte 2 und einem Sicherungsglied 3. Das Sicherungsglied 3 weist mindestens ein vorzugsweise aber zwei Biegefederstäbe 19 auf, die im Querschnitt aus einem runden Federdraht bestehen und in der Formgebung einen geradlinigen Verlauf haben. Um die Biegefederstäbe 19 in das Gleitstück 1 einzupassen, werden sie mit einem Arbeitschritt durch Ablängen auf das erforderliche gebracht. Die Stützplatte 2 nach Fig. 1 und Fig. 2 besteht aus einem metallischen Werkstoff d.h. vorzugsweise aus einem Bandmaterial. Durch mehrere Umformprozesse wird erreicht, dass die Stützplatte 2 das Sicherungsglied 3 in einer gesicherten und funktionsfähigen Lage festhält.

Die Stützplatte 2 und das Sicherungsglied 3 bilden so ein als ein Ganzes ausmachendes Bauteil 13. Abkröpfungen 14,14', die den Biegefederstab 19 soweit umgreifen, dass einseitig eine Öffnung zum Einlegen entsteht, sichern den Biegefederstab 19 an den jeweiligen Enden 15,15' der Stützplatte 2 gegen Verschiebung in Längsrichtung der Profilnut 4 und in Querrichtung zu dieser. Des Weiteren weist die Stützplatte 2,102,202 in axialer Mitte eine Lagerbohrung 16,116,216 auf, die den Durchgriff für den am Ausstellarm 9 sitzenden Zapfen 11 bildet. Die Lagerbohrung 16 ist einer Fläche der Stützplatte 2 zugeordnet, die durch eine Abkröpfung 17 entsteht. Die Abkröpfung 17 befindet sich unmittelbar in der Nähe der Lagerbohrung 16 und verläuft quer zur Profilnut 4 sowie senkrecht zur Führungsschiene 5. Zur vereinfachten Herstellung der Abkröpfung 17, sind außenseitig Einschnitte angebracht, sodass sich ein Steg 18 bildet, der gleichzeitig das Maß zwischen den Biegefederstäben 19 festlegt. Die vorgegebene Position der Biegefederstäbe 19 durch die Abkröpfungen 14,14'und den Steg 18 sorgen für ein unkompliziertes Einfügen des Zapfen 11 über die konische Andrehung des Zapfens 11, wobei die Biegefederstäbe 19 auseinandergedrückt werden und anschließend in die Umfangsnut 10 des Zapfens 11 sichernd einrasten. Das Gleitergehäuse 20 nach Fig. 1 und Fig. 3 besteht aus einem Kunststoffmaterial und ist im Querschnitt T-förmig. Die T-förmige Querschnittform entsteht durch die Formgebung der Führungsschiene 5. Im eingeschobenen Zustand liegt das Gleitergehäuse 20 stützend auf den Führungsflächen 7,7'. Das Gleitergehäuse 20 ist von dünnwandigem Material umgeben und formt einen Innenraum, der das als ein Ganzes ausmachende Bauteil 13 aufnimmt. Die Montage des als ein Ganzes ausmachendes Bauteils 13 in das Gleitergehäuse 20 erweist sich ebenfalls als einfach, da dass als ein Ganzes ausmachendes Bauteil 13 längs und quer zur Profilnut 4 symmetrisch ausgebildet ist. Zur Sicherung des als ein Ganzes ausmachendes Bauteils 13 sind zum freien Ende 30 der Stege 29,29' Rastnasen 31 angeordnet, die das Bauteil 13 beim Einfügen hintergreifen. Die Stege 29,29' des Gleitergehäuses 20 stehen zu den Stegen 8,8'der Profilnut 4 in einem verhältnismäßig geringfügigen Abstand zueinander, dass eine Verschiebung des Gleitstücks 1 spielfrei möglich ist. Die Stützplatte 2 reicht nahezu an die Breite 12 der Profilnut 4 heran, da die Stege 29,29' sehr dünnwandig konzipiert sind, sodass das Bauteil 13 großflächiger und damit stützend für sich betrachtet auf den Führungsflächen 7,7' der Führungsschiene 5 aufliegt.

In Fig. 1 sind zwischen der Stützplatte 2 und dem Gleitergehäuse 20 die Biegefederstäbe 19 in einer leicht vorgespannten Lage angeordnet. Damit die Biegefederstäbe 19 aus der Umfangsnut 10 des Zapfens 11 zum Entkuppeln des Ausstellarms 9 herausgedrängt werden können, sind nach Fig. 3 seitlich versetzt zur Lagerbohrung 16 am Gleitergehäuse 20 schlüssellochartige Ausnehmungen 21,21' zum Einstecken eines Schlüssels 22 angeordnet. Der Schlüssel 22 als Betätigungswerkzeug lässt sich mit seinem freien Ende 23 einführen. Dabei ist dieses freie Ende 23 des Schlüssels 22 mit einem Bart 25 versehen, der mit seinem Profil durch die schlüssellochartige Ausnehmung 21,21' passt. Übergehend befindet sich ein freier Raum 24,24' nach Fig. 1 zwischen dem Gleitergehäuse 20 und der Stützplatte 2. Der Schlüssels 22 mit seinem Bart 25 kann nur innerhalb des Raumes 24,24' verdreht werden, so dass der Bart 25 auf die Biegefederstäbe 19 treffen. Durch 90° -Drehung des Bartes 25 werden die Biegefederstäbe 19 soweit auseinandergedrückt, dass sie aus dem Bereich der Umfangsnut 10 des Zapfen 11 gelangen. Der Zapfen 11 ist damit freigegeben, so dass sich der Ausstellarm 9 von dem Gleitstück 1 ohne weiteres lösen lässt. Erleichtert wird das Lösen des Ausstellarms 9 vom Gleitstück 1 dadurch, dass die Stützplatte 2 in Verlängerung der Drehachse der schlüssellochartigen Ausnehmung 21,21' beidseitig eine Bohrung 26,26' aufweist, die das freie Ende des Schlüssels 22 zentriert (Fig. 1 und Fig. 2). Die bereits voran erwähnte Abkröpfung 17 der Stützplatte 2, ist in der Höhe 27 so ausgebildet, dass sie etwa der Höhe des Bartes 25 entspricht, der zwischen der Fläche 28 der Stützplatte 2 und dem Gleitergehäuse 20 verdrehbar ist. Gleichzeitig dient die Fläche 28 als Endanschlag des Schlüssels 22, wenn eine Verstellung vorgenommen wird.

Zu erwähnen ist noch, dass das Gleitstück 1,100,200 sowohl zu seiner Längsmittelebene als auch zu seiner Querebene symmetrisch ausgebildet ist und das beidseitig neben dem Zapfen 11 eine Anordnung getroffen wurde, damit die Rastverbindung zwischen dem Zapfen 11 und dem Gleitstück 1,100,200 ausgerückt werden kann, gleichgültig ob der Ausstellarm 9 rechts oder links angeschlagen ist.

Im Unterschied zur Ausführungsform gemäß Fig. 1 bis Fig. 3 handelt es sich um ein Gleitstück 100,200, bestehend aus einer Stützplatte 102,202, einem Sicherungsglied 103,203, einer Halteplatte 150,250 und einem Gleitmittel 154,254.

Die Stützplatte 102,202 besteht dabei aus einem metallischen Werkstoff vorzugsweise aus einem Bandmaterial, welches nach Fig. 4 und Fig. 6 quer zur Längsrichtung der Führungsschiene 5 im Querschnitt eine mehrfach abgewinkelte Kontur 153,253 aufweist, die sich der Profilnut 4 der Führungsschiene 5 anpasst.

Die abgewinkelte Kontur 153 gemäß der Fig. 4 nimmt an den Stegen 8,8' der Profilnut 4 einen parallelen doppelwandigen Verlauf an, sodass sich eine U-Form bildet. Das offene Ende der Kontur 153 liegt auf den Führungsflächen 7,7' der Führungsschiene 5 stützend auf. Zum erreichen einer guten Gleiteigenschaft, werden über das offene Ende der Kontur 153 der Stützplatte 102 aus einem Kunststoffmaterial bestehende Gleitmittel 154 montiert. Die in diesem Ausführungsbeispiel aufgezeigten Gleitmittel 154 sind im Querschnitt U-förmig. Eine kostengünstige Art der Herstellung für die Gleitmittel 154 bietet sich durch die U-Form, indem das Gleitmittel 154 beispielweise aus einem Endlosband besteht und je nach Bedarf entsprechend auf die Länge des Gleitstücks 100 abgelängt wird. Durch Bildung einer Nut 155 zwischen der doppelwandigen Kontur 153 der Stützplatte 102, lässt sich das Gleitmittel 154 unter leichtem Druck unverlierbar über das offene Ende aufschieben.

Zur gesicherten Aufnahme der Halteplatte 150,250 in die Stützplatte 102,202 weist die Stützplatte 102,202 auf der zur Stellachse 6 gerichteten Seite Rastnasen 151,251 auf. Nach der Fig. 4 und Fig. 5 wird das Sicherungsglied 3 ebenfalls wie in dem ersten Ausführungsbeispiel nach den Fig. 1 bis Fig. 3 von einem vorzugsweise zwei Biegefederstäben 119 gebildet, die den gleichen Herstellungsmethoden der Biegefederstäben 19 entsprechen. Dabei sind die Biegefederstäbe 119 in der vorzugsweise aus einem metallischen Werkstoff hergestellten Halteplatte 150 gegen herausfallen gesichert. Der Einfachheit halber erfolgt die Sicherung der Biegefederstäbe 119 in ähnlicher Weise wie in dem ersten Ausführungsbeispiel nach Fig. 1 bis Fig. 3 durch an den jeweiligen längsseitigen Enden der Profilnut 4 angeordnete Abkröpfungen 114,114', die das Sicherungsglied 103 außenseitig gegen verschieben sichern und fixieren.

Gemäß der Fig. 1 bis Fig. 3 der Stützplatte 2, weist die Halteplatte 150 nach Fig. 5 und Fig. 6 unmittelbar in der Nähe der Lagerbohrung 116 quer zur Profilnut 4 und senkrecht zur Führungsschiene 5 eine Abkröpfung 117 auf, die außenseitig so ausgeschnitten ist, dass ein Steg 118 entsteht. Der Steg 118 bildet dem zu Folge das Abstandsmaß zu den Biegefedern 119.

Des Weiteren ist an den zu dem Kopfende endseitigen Abkröpfungen 114,114' nach Fig. 5 eine Erweiterung 152,152' vorgesehen, die zuerst abgewinkelt in Richtung Stellachse 6 der Halteplatte 150 verläuft und anschließend zum freien Ende hin sich von der Stellachse 6 weg bewegt. Die Erweiterung 152,152' sichert die Biegefederstäbe 119 gegen herausfallen aus der Halteplatte 150 und dient zur Montageerleichterung in die Stützplatte 2. Im eingebauten Zustand ist die Halteplatte 150 mit dem bereits vorher montierten Sicherungsglied 103 durch die Rastverbindung 151 mit der Stützplatte 102 verbunden. Um die Halteplatte 150 gegen Verschieben in Längsrichtung zur Führungsschiene 5 zu sichern, rastet die Erweiterung 152,152' über die untere Fläche 128 der Stützplatte 102. In der Zusammenschau bildet das Gleitstück 100 ein als ein Ganzes ausmachendes Bauteil 113, wobei die Stützplatte 102 nahezu die Breite der Profilnut 4 hat und über die Führungsflächen 7,7' an die rechtwinklig angeordneten Stege 8,8' heranreicht.

Zwischen der Stützplatte 102 und der Halteplatte 150 sind die Biegefederstäbe 119 in einer leicht vorgespannten Lage angeordnet. Damit die Biegefederstäbe 119 aus der Umfangsnut 10 des Zapfens 11 zum Entkuppeln des Ausstellarms 9 herausgedrängt werden können, sind nach Fig. 4 seitlich versetzt zur Lagerbohrung 116 am Stützteil 102 schlüssellochartige Ausnehmungen 121,121'zum Einstecken eines Schlüssels 22 angeordnet. Der Schlüssel 22 als Betätigungswerkzeug lässt sich mit seinem freien Ende 23 einführen. Dabei ist dieses freie Ende 23 des Schlüssels 22 mit einem Bart 25 versehen, der mit seinem Profil durch die schlüssellochartige Ausnehmung 121,121' passt. Übergehend befindet sich ein freier Raum 124,124' nach Fig. 5 zwischen der Halteplatte 150 und der unteren Fläche 128 der Stützplatte 102. Der Schlüssels 22 mit seinem Bart 25 kann nur innerhalb des Raumes 124,124' verdreht werden, so dass der Bart 25 auf die Biegefederstäbe 119 treffen. Durch 90° -Drehung des Bartes 25 werden die Biegefederstäbe 119 soweit auseinandergedrückt, dass sie aus dem Bereich der Umfangsnut 10 des Zapfen 11 gelangen. Der Zapfen 11 ist damit freigegeben, so dass sich der Ausstellarm 9 vom Gleitstück 100 ohne weiteres lösen lässt. Erleichtert wird das Lösen des Ausstellarms 9 vom Gleitstück 100 dadurch, dass die Halteplatte 150 in Verlängerung der Drehachse der schlüssellochartigen Ausnehmung 121,121' beidseitig eine Bohrung 126,126' aufweist, die das freie Ende des Schlüssels 22 zentriert (Fig. 5). Die bereits voran erwähnte Abkröpfung 117 der Halteplatte 150, ist in der Höhe 127 so ausgebildet, dass sie etwa der Höhe des Bartes 25 entspricht, der zwischen der Fläche 128 der Stützplatte 102 und der Halteplatte 150 verdrehbar ist.

Eine nicht erfindungsgemäße Ausführungsvariante zeigt die Fig. 6 und Fig. 7, wobei das Gleitstück 200 sich aus einer Stützplatte 202, einem Halteteil 250, einem Sicherungsglied 203 und einem Gleitmittel 254 zusammensetzt. Genau wie die Stützplatte 102 nach Fig. 4 nur in einer geänderten Kontur 253, ist die Stützplatte 202 nach Fig. 6 ausgebildet und entsprechend der Profilnut 4 der Führungsschiene 5 angepasst. Dem nach ist im Bereich der Profilnut 4 der Führungsflächen 7,7' und in Verlängerung rechtwinklig zu den Führungsflächen 7,7' senkrecht zur Stellachse 6 ein Gleitmittel 254 angeordnet, welches beispielsweise durch Klipsen mit der Stützplatte 202 verbindbar ist und aus einem Kunststoffmaterial besteht.

Die Halteplatte 250 ist quer zur Führungsschiene 5 durch die Mittelachse des Gleitstücks 200 geteilt, wobei die Teilstücke durch mindestens eine vorzugsweise zwei Zugfedern 219 federkraftbeaufschlagt miteinander verbunden sind. Durch eine entsprechende Formänderung der Halteplatte 250 an den jeweiligen von der Stellachse 6 entfernten Enden, werden die Zugfedern 219 in vorgespannter Lage formschlüssig gehalten. Somit weist jeweils eine geteilte Halteplatte 250 auf der zur Stellachse 6 gerichteten Seite einen halbkreisförmigen Ausschnitt 255,255' auf, die im zusammengebauten Zustand die Lagerbohrung 216 bilden und die Umfangsnut 10 des Zapfens 11 umschließen.

Die geteilten Halteplatten 250 sind wie schon voran erwähnt durch an der Stützplatte 202 befindliche Rastnasen 251 mit der Stützplatte 202 verbunden und bilden ein als ein Ganzes ausmachendes Bauteil 213.

Um den halbkreisförmigen Ausschnitt 255,255' aus der Umfangsnut 10 des Zapfens 11 zum Entkuppeln des Ausstellarms 9 herauszudrängen, bedarf es nicht wie bei den voran gezeigten Ausführungen nach Fig. 1 bis Fig. 5 der Verwendung eines Hilfsmittels in Form eines Schlüssels. Nach Fig. 7 ist an der Halteplatte 250 des Gleitstücks 200 an den von der Lagerbohrung 216 entfernten Enden eine in etwa um 90° abgewinkelte Fläche 256,256' angebracht, die über die Länge der Stützplatte 202 und aus der Profilnut 4 der Führungsschiene 5 achsparallel zum Zapfen 11 ausragt.

Mit Fingerdruck gegen die Federkraft der Zugfedern 219 an den abgewinkelten Flächen 256,256' lassen sich die geteilten Halteplatten 250 auseinanderziehen. Die halbkreisförmigen Ausschnitte 255,255' werden so aus der Umfangsnut 10 des Zapfen 11 herausgedrängt und geben den Zapfen 11 frei, so dass sich der Ausstellarm 9 vom Gleitstück 200 ohne weiteres lösen lässt.

### Bezugszeichenliste:

- 1: Gleitstück
- 2: Stützplatte
- 3: Sicherungsglied
- 4: Profilnut
- 5: Führungsschiene
- 6: Stellachse
- 7,7': Führungsfläche
- 8,8': Steg
- 9: Ausstellarm
- 10: Umfangsnut
- 11: Zapfen
- 12: Breite
- 13: Bauteil
- 14,14': Abkröpfung
- 15,15': Ende
- 16: Lagerbohrung
- 17: Abkröpfung
- 18: Steg
- 19: Biegefederstab
- 20: Gleitergehäuse
- 21,21': Ausnehmung
- 22: Schlüssel
- 23: freies Ende
- 24,24': Raum
- 25: Bart
- 26,26': Bohrung
- 27: Höhe
- 28,28': Fläche
- 29,29': Steg
- 30: Ende
- 31: Rastnase
- 32: Andrehung
- 100: Gleitstück
- 102: Stützplatte
- 103: Sicherungsglied
- 113: Bauteil
- 114,114': Abkröpfung
- 116: Lagerbohrung
- 117: Abkröpfung
- 118: Steg
- 119: Biegefederstab
- 120,121': Ausnehmung
- 124,124': Raum
- 126,126': Bohrung
- 127: Höhe
- 128: Fläche
- 150: Halteplatte
- 151: Rastnase
- 152,152': Erweiterung
- 153: Kontur
- 154: Gleitmittel
- 155: Nut
- 200: Gleitstück
- 202: Stützplatte
- 203: Sicherungsglied
- 213: Bauteil
- 216: Lagerbohrung
- 219: Zugfeder
- 250: Halteplatte
- 251: Rastnase
- 253: Kontur
- 254: Gleitmittel
- 255,255': Ausschnitt
- 256,256': Fläche

## Patentansprüche

1. Beschlag für ein Fenster oder eine Tür, bestehend aus mindestens einer am Blendrahmen befestigten Führungsschiene (5) und einem in einer hinterschnittenen Profilnut (4) der Führungsschiene (5) längsverschiebbar entlang einer Stellachse (6) geführten Gleitstück (1,100), wobei das Gleitstück (1,100) aus mindestens einer Stützplatte (2,102) und einem federbelasteten Sicherungsglied (3,103,203) besteht, dass die Profilnut (4) parallel zur Stellachse (6) erstreckende Führungsflächen (7,7') umfasst, welche als Stützbasis für die Führung des Gleitstücks (1,100) quer zur Stellachse (6) dienen, wobei in Verlängerung der Führungsflächen (7,7') rechtwinklig angeordnete Stege (8,8') das Gleitstück (1,100) senkrecht zur Stellachse (6) abstützen, wobei das Gleitstück (1,100) mit einem am Flügel befindlichen Ausstellarm (9) eines Beschlages verbindbar ist und mittels des federbelasteten Sicherungsglieds (3,103), welches in eine Umfangsnut (10) eines am Ausstellarm (9) sitzenden Zapfens (11) eingreifen kann, das Gleitstück (1) an dem Flügel angeordneten Ausstellarm (9) in einer form- und/oder kraftschlüssigen Verbindung fixieren kann,
**dadurch gekennzeichnet**,
**dadurch gekennzeichnet, dass** die Stützplatte (2,102) nahezu die Breite (12) der Profilnut (4) hat und über die Führungsflächen (7,7') an die rechtwinklig angeordneten Stege (8,8') heranreicht, dass die Stützplatte (2,102) mit dem federbelasteten Sicherungsglied (3,103) kraft- und/oder formschlüssig zu einem als ein Ganzes ausmachendes Bauteil (13,113) verbindbar ist, und dass die aus einem metallischen Bandmaterial gefertigte Stützplatte (2,102) das Sicherungsglied (3,103) mittels Abkröpfungen (14,14';114,114') sichernd festhält.

2. Beschlag nach Anspruch 1,
**dadurch gekennzeichnet,**
**dass** die Stützplatte (2,102) mit dem Gleitstück (1,100) längs und quer zur Profilnut (4) symmetrisch ausgebildet ist.

3. Beschlag nach einem der Ansprüche 1 bis 2,
**dadurch gekennzeichnet,**
**dass** die Stützplatte (2,102) das Sicherungsglied (3,103) mittels Abkröpfungen (14,14;114,114') an den jeweiligen Enden (15,15';115,115') gegen Verschieben in Längs-, in Quer- und in senkrechter Richtung des Gleitstücks (1,100) sichert.

4. Beschlag nach einem oder mehreren der vorangehenden Ansprüche 1 bis 3,
**dadurch gekennzeichnet,**
**dass** die Stützplatte (2,102) eine Lagerbohrung (16,116) aufweist, die den Durchgriff für den am Ausstellarm (9) sitzenden Zapfen (11) bildet.

5. Beschlag nach Anspruch 4,
**dadurch gekennzeichnet,**
**dass** die Stützplatte (2) unmittelbar in der Nähe der Lagerbohrung (16) quer zur Profilnut (4) und senkrecht zur Führungsschiene (5) eine Abkröpfung (17) aufweist, die außenseitig so ausgeschnitten ist, dass sich ein Steg (18) bildet.

6. Beschlag nach Anspruch 5,
**dadurch gekennzeichnet,**
**dass** der Steg (18) an der Stützplatte (2) das Abstandsmaß für das federbelastete Sicherungsglied (3) innenseitig und die endseitigen Abkröpfungen (14,14') außenseitig bildet.

7. Beschlag nach einem oder mehreren der vorangehenden Ansprüche 1 bis 6,
**dadurch gekennzeichnet,**
**dass** ein Gleitergehäuse (20) an den rechtwinklig angeordneten Stegen (8,8') der Profilnut (4) verlaufende Stege (29,29') aufweist, die zum freien Ende (30) hin Rastnasen (31) besitzen, mit dem das als ein Ganzes ausmachendes Bauteil (13) nach einem Einrastvorgang hintergriffen ist.

8. Beschlag nach Anspruch 7,
**dadurch gekennzeichnet,**
**dass** das Gleitergehäuse (20) aus einem Kunststoffmaterial gefertigt ist.

9. Beschlag nach einem oder mehreren der vorangehenden Ansprüche 1 bis 8,
**dadurch gekennzeichnet,**
**dass** die Stützplatte (102) zur gesicherten Aufnahme einer Halteplatte (150) auf der zur Stellachse (6) gerichteten Seite Rastnasen (151) aufweist.

10. Beschlag nach Anspruch 9,
**dadurch gekennzeichnet,**
**dass** das federbelastete Sicherungsglied (103) von einem, vorzugsweise aber zwei in der Halteplatte (150) und an der Stützplatte (102) sitzenden Biegefederstäben (119) gebildet wird.

11. Beschlag nach einem oder mehreren der vorangehenden Ansprüche 9 bis 10,
**dadurch gekennzeichnet,**
**dass** die Halteplatte (150) unmittelbar in der Nähe der Lagerbohrung (116) quer zur Profilnut (4) und senkrecht zur Führungsschiene (5) eine Abkröpfung (117) aufweist, die außenseitig so ausgeschnitten ist, dass sich ein Steg (118) bildet.

12. Beschlag nach Anspruch 11,
**dadurch gekennzeichnet,**
**dass** der Steg (118) an der Halteplatte (150) das Abstandsmaß für das federbelastete Sicherungsglied (103) innenseitig und die endseitigen Abkröpfungen (114,114') außenseitig bildet.

13. Beschlag nach einem oder mehreren der vorangehenden Ansprüche 1 bis 12,
**dadurch gekennzeichnet,**
**dass** das Gleitstück (100) aus zwei durch Rastverbindung miteinander verbundenen Teilen, einer Stützplatte (102) und der Halteplatte (150) besteht, zwischen denen die Biegefederstäbe (119) federkraftbeaufschlagbar sind.

14. Beschlag nach einem oder mehreren der vorangehenden Ansprüche 9 bis 13,
**dadurch gekennzeichnet,**
**dass** das Sicherungsglied (103) über eine Erweiterung (152,152') an der Abkröpfung (114,114') der Halteplatte (150) durch Aufklipsen an die Stützplatte (102) gegen Verschieben in Längsrichtung der Führungsschiene (5) gesichert ist.

15. Beschlag nach einem oder mehreren der vorangehenden Ansprüche 1 bis 14,
**dadurch gekennzeichnet,**
**dass** die Stützplatte (102) quer zur Längsrichtung der Führungsschiene (5) im Querschnitt eine mehrfach abgewinkelte Kontur (153) aufweist, die sich der Profilnut (4) der Führungsschiene (5) anpasst.

16. Beschlag nach einem oder mehreren der vorangehenden Ansprüche 1 bis 15,
**dadurch gekennzeichnet,**
**dass** im Bereich der Profilnut (4) der Führungsflächen (7,7') und in Verlängerung rechtwinklig zu den Führungsflächen (7,7') senkrecht zur Stellachse (6), Gleitmittel (154) angeordnet sind, die vorzugsweise durch Klipsen oder Aufpressen mit der Stützplatte (102) verbindbar sind und aus einem Kunststoffmaterial bestehen.

## Claims

1. Fitting for a window or a door, consisting of at least one guide rail (5) attached to the frame and a sliding piece (1, 100) which is guided along an adjusting shaft (6) in an undercut profile groove (4) of the guide rail (5), whereby the sliding piece (1, 100) consists of at least one support plate (2, 102) and a spring-loaded locking member (3, 103), so that the profile groove (4) encompasses the guide surfaces (7, 7) parallel to the adjusting shaft (6), which serve as supporting base for guiding the slide piece (100) crosswise to the adjusting shaft (6), whereby gutters (8, 8), which are arranged at right angles to the extension of the guidance surfaces (7, 7), support the sliding piece perpendicularly to the adjusting shaft (6), whereby the sliding piece (1, 100) can be connected to an opening arm (9) on the leaf of a fitting and which can fix the sliding piece (1) to the opening arm (9) in an interlocking or friction-coupled way by means of the spring-loaded locking member (3, 103) which can latch into a peripheral groove (10) of a stud (11) on the opening arm (9) **characterised by** the supporting plate (2, 102) nearly having the width (12) of the profile groove (4) and extending to the gutters (8, 8) which are arranged at right angles, by it being possible to connect the supporting plate (2, 102) to the spring-loaded locking member (3, 103) in an interlocking or friction-coupled way as a component (13, 113) forming a unit, and by the supporting plate (2, 102), which is made of a metallic strip material, retains the locking member (3, 103) securely by means of crimping (16, 14; 114, 114).

2. Fitting according to Claim 1, **characterised by** the supporting plate (2, 102) with the sliding piece (1, 100) being designed symmetrically along and across the profile groove (4).

3. Fitting according to one of Claims 1 to 2, **characterised by** the supporting plate (2, 102) securing the locking member (3, 103) by means of crimping (14, 14; 114, 114) at the respective ends (15, 15; 115, 115) against moving of the sliding piece (1, 100) longitudinally, transversely and vertically.

4. Fitting according to one or more of the preceding Claims 1 to 3, **characterised by** the supporting plate (2, 102) having a bearing hole (16, 116), which forms the penetration for the stud (11) on the opening arm (9).

5. Fitting according to Claim 4, **characterised by** the supporting plate (2) having a crimping (17) close to the bearing hole (16) across the profile groove (4) and vertical to guide rail (5), which is cut out on the outside so that a gutter (18) is formed.

6. Fitting according to Claim 5, **characterised by** the gutter (18) on the supporting plate (2) forming the clearance for the spring-loaded locking member (3) on the inside and for the end crimping (14, 14) on the outside.

7. Fitting according to one or more of the preceding Claims 1 to 6, **characterised by** a sliding housing (20) having grooves (29, 29) on the grooves (8, 8') at right angles of the profile groove (4), which have latching tabs (31) towards the free end (30), with which the component (13), which forms a unit, is engaged after a latching procedure.

8. Fitting according to Claim 7, **characterised by** the sliding housing (20) being manufactured of a plastic material.

9. Fitting according to one or more of the preceding Claims 1 to 8, **characterised by** the supporting plate (102) having latching tabs (151) for secure mounting of a holding plate (150) on the side facing the adjusting shaft (6).

10. Fitting according to Claim 9, **characterised by** the spring-loaded locking member (103) being formed by one, but preferably two bending spring rods (119) in the holding plate (150) and on the supporting plate (102).

11. Fitting according to one or more of the preceding Claims 9 to 10, **characterised by** the holding plate (150) having a crimping (117) close to the bearing hole (116) across from the profile groove (4) and vertical to guide rail (5), which is cut out on the outside so that a gutter (118) is formed.

12. Fitting according to Claim 11, **characterised by** the gutter (118) on the holding plate (150) forming the clearance for the spring-loaded locking member (103) on the inside and for the end crimping (114, 114) on the outside.

13. Fitting according to one or more of the preceding Claims 1 to 12, **characterised by** the sliding piece (100) consisting of two pieces connected by means of a latching connection, a support plate (102) and the holding plate (150), between which the bending spring rods (119) can be spring-loaded.

14. Fitting according to one or more of the preceding Claims 9 to 13, **characterised by** the locking member (103) being secured against moving longitudinally along the guide rail (5) via an extension (152, 152) on the crimping (114, 114) of the holding plate (150) by means of clipping onto the support plate (102).

15. Fitting according to one or more of the preceding Claims 1 to 14, **characterised by** the supporting plate (102) having multiple angled contours (153) in cross section across the longitudinal direction of the guide rail (5), which adapt to the profile groove (4) of the guide rail (5).

16. Fitting according to one or more of the preceding Claims 1 to 15, **characterised by** sliding means (154) being arranged in the range of the profile groove (4) of the guide surfaces (7, 7) and in the extension at right angles with the guide surfaces (7, 7) vertical to the adjusting shaft (6), which can preferably be connected to the supporting plate (102) by means of clipping or pressing, and consist of a plastic material.

## Revendications

1. Ferrure pour une fenêtre ou pour une porte, qui est composée d'au moins un rail de guidage (5), fixé au dormant, et d'une pièce coulissante (1, 100) mobile, qui est guidée longitudinalement le long d'un axe de réglage (6), dans une rainure (4) du rail de guidage (5), profilée en contre-dépouille, sachant que la pièce coulissante (1, 100) consiste au moins en une plaque de support (2, 102) et en un organe de sécurité (3, 103, 203) commandé par ressort, que la rainure profilée (4) comprend des surfaces de guidage (7, 7') qui, s'étendant parallèlement à l'axe de réglage (6), servent de base de support pour le déplacement de la pièce coulissante (1, 100), transversalement par rapport à l'axe de réglage (6), sachant que des ailes (8, 8'), disposées à angle droit, en prolongement des surfaces de guidage (7, 7'), soutiennent la pièce coulissante (1, 100) perpendiculairement à l'axe de réglage (6), la pièce coulissante (1, 100) pouvant être reliée à un bras de positionnement (9) d'une ferrure, placé sur le battant, et la pièce coulissante (1) pouvant être fixée par emboîtement et / ou par adhérence, au moyen de l'organe de sécurité (3, 103), qui s'engage dans une rainure périphérique (10) d'un téton (11), qui est situé sur le bras de positionnement (9), **caractérisée en ce que** la plaque de support (2, 102) présente approximativement la largeur (12) de la rainure profilée (4) et qu'elle atteint, par l'intermédiaire des surfaces de guidage (7, 7'), les ailes (8, 8'), disposées à angle droit, que la plaque de support (2, 102) peut être reliée, par adhérence et / ou par emboîtement, à l'organe de sécurité commandé par ressort (3, 103) pour former un élément structurel (13, 113) considéré comme une unité.

2. Ferrure selon la revendication 1, **caractérisée en ce que** la plaque de support (2, 102), avec la pièce coulissante (1, 100), est configurée symétriquement longitudinalement et transversalement par rapport à la rainure profilée (4).

3. Ferrure selon l'une des revendications 1 à 2, **caractérisée en ce que** la plaque de support (2, 102) protège l'organe de sécurité (3, 103) contre un déplacement dans les directions longitudinale, transversale et verticale de la pièce coulissante (1, 100) au moyen de portions courbes (14, 14' ; 114, 114'), qui sont situées aux extrémités respectives (15, 15' ; 115, 115').

4. Ferrure selon l'une ou plusieurs des revendications précédentes 1 à 3, **caractérisée en ce que** la plaque de support (2, 102) présente un alésage (16, 116), qui forme le passage pour le téton (11) situé sur le bras de positionnement (9).

5. Ferrure selon la revendication 4, **caractérisée en ce que** la plaque de support (2) forme, à proximité directe de l'alésage (16), transversalement par rapport à la rainure profilée (4) et verticalement par rapport au rail de guidage (5), une portion courbe (17), qui est découpée de sorte que son contour extérieur forme une patte (18).

6. Ferrure selon la revendication 5, **caractérisée en ce que** la patte (18), qui équipe la plaque de support (2), détermine, à l'intérieur, la dimension de l'intervalle alloué à l'organe de sécurité (3) commandé par ressort et forme, à l'extérieur, les portions courbes (14, 14') des extrémités.

7. Ferrure selon l'une ou plusieurs des revendications précédentes 1 à 6, **caractérisée en ce qu'**un boîtier (20) est doté d'ailes (29, 29'), qui, s'étendant sur les ailes (8, 8') de la rainure profilée (4), disposées à angle droit, sont pourvues, vers leur extrémité libre (30), de nez d'arrêt (31), qui saisissent à l'arrière l'élément structurel (13) formant une unité.

8. Ferrure selon la revendication 7, **caractérisée en ce que** le boîtier (20) est réalisé en matière synthétique.

9. Ferrure selon l'une ou plusieurs des revendications précédentes 1 à 8, **caractérisée en ce que**, pour la fixation fiable d'une plaque de maintien (150), la plaque d'appui (102), est dotée de nez de blocage (15) sur le côté orienté vers l'axe de réglage (6).

10. Ferrure selon la revendication 9, **caractérisée en ce que** l'organe de sécurité (103) commandé par ressort est formé par une, de préférence par deux tiges élastiques à la flexion (119), qui sont placées dans la plaque de maintien (150) et sur la plaque de support (102).

11. Ferrure selon l'une ou plusieurs des revendications précédentes 9 à 10, **caractérisée en ce que** la plaque de maintien (150) présente, à proximité directe de l'alésage (116), transversalement par rapport à la rainure profilée (4) et verticalement par rapport au rail de guidage (5), une portion courbe (117), qui est découpée de sorte que son contour extérieur forme un élément structurel (118).

12. Ferrure selon la revendication 11, **caractérisée en ce que** l'élément structurel (118), qui équipe la plaque de maintien (150), détermine, à l'intérieur, la dimension de l'intervalle alloué à l'organe de sécurité (103) commandé par ressort et forme, à l'extérieur, les portions courbes (114, 114') des extrémités.

13. Ferrure selon l'une ou plusieurs des revendications précédentes 1 à 12, **caractérisée en ce que** la pièce coulissante (100) est composée de deux éléments, qui sont reliés ensemble par encliquetage, d'une plaque de support (102) et de la plaque de maintien (150), entre lesquels les tiges élastiques, flexibles (119) peuvent exercer une force élastique.

14. Ferrure selon l'une ou plusieurs des revendications précédentes 9 à 13, **caractérisée en ce que** l'organe de sécurité (103) est protégé contre un déplacement dans la direction longitudinale du rail de guidage (5) par clipsage sur la plaque de support (102), par l'intermédiaire d'un élargissement (152, 152') de la portion courbe (114, 114') de la plaque de maintien (150).

15. Ferrure selon l'une ou plusieurs des revendications précédentes 1 à 14, **caractérisée en ce que** la plaque de support (102) présente, en coupe transversale, transversalement par rapport à la direction longitudinale du rail de guidage (5), un contour (153) plusieurs fois coudé, qui est adapté à la rainure profilée (4) du rail de guidage (5).

16. Ferrure selon l'une ou plusieurs des revendications précédentes 1 à 15, **caractérisée en ce que** des moyens de glissement (154), qui peuvent être reliés à la plaque de support (102), de préférence par clipsage ou par pression, et qui consistent en une matière synthétique, sont disposés dans la région de la rainure profilée (4) des surfaces de guidage (7, 7') et en prolongement, à angle droit, des surfaces de guidage (7, 7'), perpendiculairement à l'axe de réglage (6).
